# FASCICULE DE BREVET EUROPEEN

(11) **EP 0 728 610 B1**
(45) Date de publication et mention de la délivrance du brevet: **12.08.1998**
(21) Numéro de dépôt: 96400348.7
(22) Date de dépôt: 20.02.1996
(51) Int. Cl.: B60K 5/12, F16F 1/379, F16L 59/02

(54) **Ecran thermique pour biellette de reprise de couple de moteur à combustion interne**
Hitzeschild für einen Drehmomentanlaufschwingarm eines Verbrennungsmotors
Thermal shield for a torque starting rocker bar of an internal combustion engine

(30) Priorité: 22.02.1995 FR 9502048
(43) Date de publication de la demande: 28.08.1996
(73) Titulaire: HUTCHINSON, F-75008 Paris (FR)
(72) Inventeur: Nicolas, Olivier, F-92240 Malakoff (FR)
(74) Mandataire: Picard, Jean-Claude Georges

(56) Documents cités:
- EP-A- 0 434 492
- EP-A- 0 586 077
- DE-C- 3 419 060
- PATENT ABSTRACTS OF JAPAN vol. 14, no. 339 (M-1001) [4282] , 23 Juillet 1990 & JP-A-02 118224 (KINUGAWA RUBBER), 2 Mai 1990,
- NTIS TECHNICAL NOTES, Avril 1989, SPRINGFIELD (US), page 311 XP000033636 EDWARD H. TEPPER: "improved aluminized multilayer insulation"

## Description

La présente invention concerne un écran thermique pour biellette de reprise de couple de moteur à combustion interne, cette biellette comportant des masses de matière élastique d'amortissement des vibrations, adhérisées entre une armature extérieure rigide et des douilles extrêmes de liaison, d'une part à la caisse du véhicule, d'autre part audit moteur.

L'utilisation de pots catalytiques dans l'automobile entraîne une élévation de température dans le compartiment du moteur. D'autre part, on peut constater une tendance très nette des constructeurs à remonter la ligne d'échappement dans ce compartiment, ce qui la rend de plus en plus proche des autres organes présents sous le capot du moteur. Cette proximité accrue et l'élévation de température qui en résulte posent des problèmes de tenue thermique des autres organes et notamment des pièces antivibratoires.

Dans le cas d'une suspension pendulaire du moteur, la biellette de reprise de couple est souvent très proche de la ligne d'échappement. Les températures relevées sur des véhicules lors d'essais de roulage dans des conditions sévères peuvent être supérieures à 200°C, voire 250°C.

Une biellette de reprise de couple limitant les débattements du moteur est généralement composée d'une armature en tôle, en aluminium ou en thermoplastique, et de deux articulations élastiques qui assurent la fonction antivibratoire et qui sont constituées d'armatures métalliques et de plots en caoutchouc, le plus souvent du caoutchouc naturel. Les températures en pointe relevées sur une telle biellette dans des conditions de roulage sont beaucoup trop élevées pour garantir son bon fonctionnement durant toute la vie du véhicule.

Cette élévation de température est engendrée par deux phénomènes :
- la convection de l'air ambiant sur la biellette,
- le rayonnement de la ligne d'échappement qui se trouve à proximité de celle-ci.

La part du rayonnement est prépondérante sur celle de la convection.

Il est donc nécessaire d'utiliser un écran thermique de protection afin d'obtenir une température d'utilisation de la biellette suffisamment modérée pour lui assurer une durée de vie satisfaisante.

Une solution très souvent utilisée pour éviter une surchauffe d'un organe situé à proximité de la ligne d'échappement consiste à positionner une tôle rigide en acier ou en aluminium entre cet organe et la ligne d'échappement. Cette solution, si elle est efficace d'un point de vue thermique, comporte cependant un certain nombre d'inconvénients.

Il serait tout d'abord difficile de fixer un tel écran sur la biellette. La tôle étant rigide, on ne peut envisager de la faire passer entre la chape de fixation du véhicule et l'armature de la biellette. Lorsque la biellette est sous tension, la géométrie des plots en caoutchouc est telle que ceux-ci "bavent" en dehors de l'armature et viennent en contact avec la chape. On ne peut pas envisager non plus de décaler l'écran vers la chape, car il y aurait alors des problèmes de frottement entre la chape et la tôle. Dans le cas d'une biellette avec une armature thermoplastique, il est inconcevable de visser l'écran sur l'armature, car cela en affaiblirait la structure, si bien que la biellette n'assurerait plus son rôle de limiteur du débattement du moteur.

Une autre solution consisterait à fixer cette tôle sur la caisse du véhicule. Elle serait satisfaisante techniquement mais ce principe serait très coûteux puisqu'il entraînerait une opération de montage supplémentaire sur chaîne chez le constructeur.

La solution d'une tôle est également une solution "lourde" dans un contexte où la réduction de poids est un facteur déterminant pour le choix d'un concept.

Le but de la présente invention est de résoudre le problème ainsi posé tout en évitant les inconvénients des solutions déjà envisagées.

A cet effet, un écran thermique du type défini au début est, conformément à l'invention, caractérisé en ce qu'il est constitué d'une feuille de protection mince et déformable, pourvue de moyens d'assujettissement direct sur ladite armature.

Ainsi on obtient un écran thermique léger, peu onéreux et n'entraînant pas d'opérations de montage supplémentaires sur chaîne chez le constructeur. Un tel écran peut être monté directement sur la biellette, sans en perturber le fonctionnement.

De préférence, ladite feuille est constituée d'un feuillard d'aluminium sur lequel est adhérisée une feuille de matériau élastomérique ou de caoutchouc.

Le feuillard en aluminium, par ses propriétés de surface, permet d'obtenir de bonnes caractéristiques d'isolation de cet écran vis-à-vis du rayonnement de la ligne d'échappement. La feuille de matériau élastomérique permet quant à elle de maintenir ce feuillard en aluminium sans pour autant augmenter de façon considérable la rigidité de l'ensemble, qui est alors déformable de façon réversible.

On obtient de la sorte un écran ayant une bonne efficacité d'un point de vue thermique tout en restant souple. Cette souplesse permet de l'intercaler entre la chape et l'armature de la biellette sans perturber le fonctionnement antivibratoire de celle-ci.

Cette solution est adaptée à la production en grande série puisque l'on peut réaliser de grandes largeurs de film complexe en feuillard aluminium/caoutchouc et ensuite y découper les écrans thermiques avec des procédés simples et rapides.

Plusieurs solutions peuvent être envisagées pour les moyens d'assujettissement destinés à fixer cet écran thermique souple sur la biellette : par exemple par collage avec un ruban autoadhésif double face, ou grâce à des agrafes métalliques.

Ces deux solutions seraient satisfaisantes d'un point de vue technique mais auraient l'inconvénient d'engendrer un surcoût de matière.

On préfère donc, conformément à une autre caractéristique de l'invention, que lesdits moyens d'assujettissement comportent des trous de ladite feuille de protection, propres à s'encliqueter sur des saillies de ladite armature, ce qui évite tout surcout de matière.

Dans certains cas, il n'est pas indispensable d'associer un feuillard en aluminium au caoutchouc. Une simple pièce en caoutchouc (souple comme précédemment) permet de résoudre les problèmes de surchauffe des biellettes. Cette pièce en caoutchouc, si elle est moulée, peut alors venir s'emmancher sur le corps de la biellette.

Ce type d'écran ne perturbe pas le comportement anvivibratoire de la biellette.

L'écran de l'invention peut donc être encore caractérisé, sous une forme simplifiée, en ce que ladite feuille de protection est constituée de matériau élastomérique ou de caoutchouc moulé et est engagée à force sur ladite armature.

Des modes d'exécution de l'invention sont décrits ci-dessous à titre d'exemples nullement limitatifs avec référence aux figures du dessin annexé dans lequel :
- la figure 1 est une vue en coupe partielle d'un écran thermique composite conforme à l'invention ;
- la figure 2 est une vue en coupe partielle, transversale à ses articulations, de la partie supérieure d'une biellette de reprise de couple destinée à recevoir cet écran ;
- la figure 3 est une vue en coupe partielle, correspondant aux précédentes, montrant l'assujettissement de l'écran sur la biellette ;
- la figure 4 est une vue en élévation de la biellette équipée de son écran ;
- la figure 5 est une vue, en coupe par ses articulations, de la biellette équipée de son écran ; et
- la figure 6 est une vue analogue à la précédente, montrant la variante d'un écran en élastomère ou analogue, épousant la forme extérieure d'un côté de la biellette.

Sur les différentes figures, on a référencé la biellette en B et ses chapes de liaison à la caisse et au moteur du véhicule ont été référencées respectivement en C et C'. La biellette comporte une armature métallique 3 et à ses extrémités des articulations élastiques de liaison aux chapes précitées, comportant respectivement des douilles 4, 5 reliées élastiquement et rotativement aux extrémités de l'armature par des masses de matière élastique adhérisée entre douille et armature, référencées respectivement en 1 et 2.

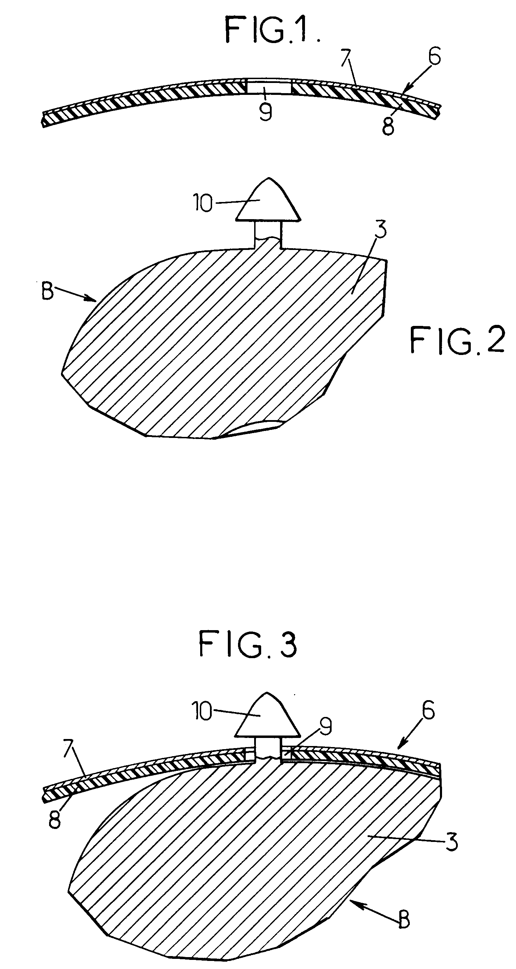

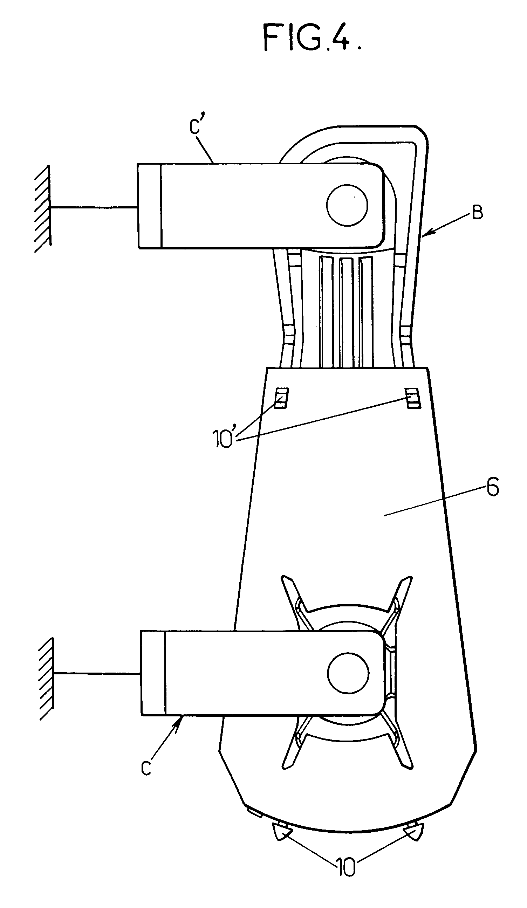

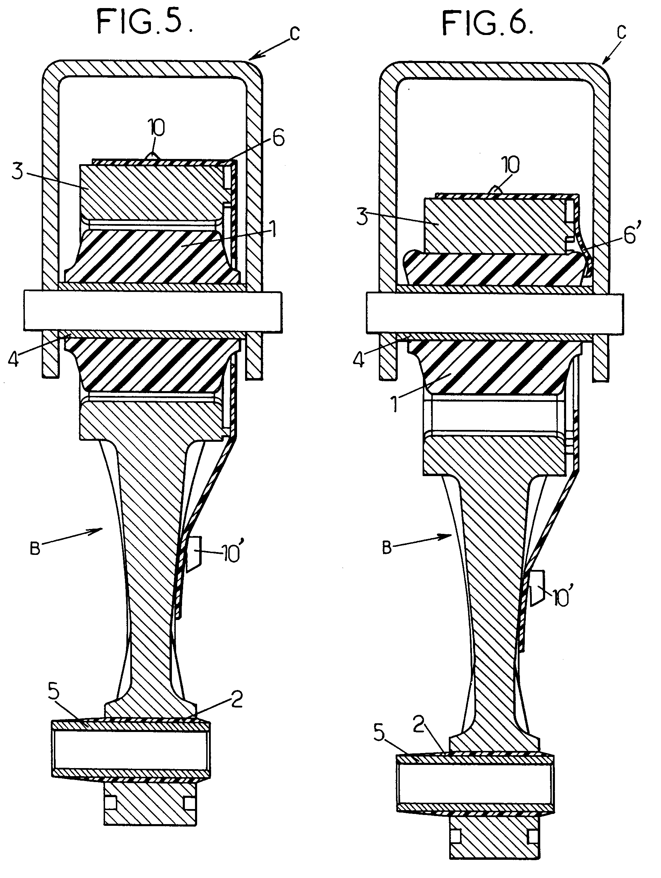

L'écran thermique composite a été référencé en 6 (figures 1, 3, 4, 5), et l'écran en simple caoutchouc ou élastomère moulé (figure 6) a été référencé en 6'. Dans tous les cas il peut comporter des trous tels que 9 propres à s'encliqueter sur des saillies en forme de picots ou crochets 10, 10' de l'armature 3 de la biellette, ce qui rend son montage simple et rapide, sans augmentation du coût de la matière.

## Revendications

1. Ecran thermique pour biellette de reprise de couple de moteur à combustion interne, cette biellette (B) comportant des masses (1, 2) de matière élastique d'amortissement des vibrations, adhérisées entre une armature extérieure rigide (3) et des douilles extrêmes (4, 5) de liaison, d'une part à la caisse du véhicule, d'autre part audit moteur, caractérisé en ce qu'il est constitué d'une feuille de protection mince et déformable (6, 6'), pourvue de moyens d'assujettissement direct sur ladite armature.

2. Ecran selon la revendication 1, caractérisé en ce que ladite feuille (6) est constituée d'un feuillard d'aluminium (7) sur lequel est adhérisée une feuille de matériau élastomérique ou de caoutchouc.

3. Ecran selon la revendication 2, caractérisé en ce que lesdits moyens d'assujettissement comportent des trous (9) de ladite feuille de protection, propres à s'encliqueter sur des saillies (10, 10') de ladite armature.

4. Ecran selon la revendication 1, caractérisé en ce que ladite feuille de protection est constituée de matériau élastomérique ou de caoutchouc moulé (6') et est engagée à force sur ladite armature (3).

## Claims

1. A heat screen for a torque pick-up rocker bar of an internal combustion engine, said rocker bar (B) comprising vibration absorbing resilient masses (1, 2) stuck between a rigid outer frame (3) and end bushes (4, 5) for connection to the vehicle body at one end and to the engine at the other, characterised in that it consists of a thin and deformable protective sheet (6, 6') provided with means for direct fitment on the said frame.

2. A screen according to claim 1, characterised in that the said sheet (6) consists comprises in 1, 2, and 4 of a sheet of aluminium (7) on which there is fixed by adhesion a sheet of rubber or elastomeric material.

3. A screen according to claim 2, characterised in that the said fixing means comprise holes (9) in the said protective sheet and are adapted to snap onto projections (10, 10') on the said frame.

4. A screen according to claim 1, characterised in that the said protective sheet consists of moulded rubber or elastomeric material (6') and is force-fitted on the said frame (3).

## Patentansprüche

1. Hitzeschild für einen Drehmomentanlauf-Schwingarm eines Verbrennungsmotors, wobei dieser Schwingarm (B) Massen (1, 2) aus schwingungsdämpfendem, elastischem Material umfaßt, welche zwischen einer starren äußeren Umhüllung (3) und Verbindungs-Endringen (4, 5) zum einen an der Karosserie des Fahrzeugs und zum andern am Motor befestigt sind, dadurch gekennzeichnet, daß das Hitzeschild aus einer dünnen und verformbaren Schutzfolie (6, 6') besteht, welche Mittel zur direkten Befestigung an der Umhüllung aufweist.

2. Hitzeschild nach Anspruch 1, dadurch gekennzeichnet, daß die Folie (6) aus einem Aluminiumband (7) besteht, auf dem ein Band aus einem Elastomermaterial oder aus Kautschuk befestigt ist.

3. Hitzeschild nach Anspruch 2, dadurch gekennzeichnet, daß die Mittel zur Befestigung in der Schutzfolie ausgebildete Ösen (9) umfassen, welche in Vorsprünge (10, 10') einrasten können, die in der Umhüllung vorgesehen sind.

4. Hitzeschild nach Anspruch 1, dadurch gekennzeichnet, daß die Schutzfolie aus Elastomermaterial oder gegossenem Kautschuk (6') besteht und unter Kraftanwendung mit der Hülle (3) verbunden wird.
